(19) Europäisches Patentamt
European Patent Office
Office européen des brevets

(11) **EP 1 167 801 A1**

(12) **EUROPEAN PATENT APPLICATION**

(43) Date of publication:
**02.01.2002 Bulletin 2002/01**

(51) Int Cl.⁷: **F16D 41/06**

(21) Application number: **01250233.2**

(22) Date of filing: **22.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.06.2000 JP 2000198976**
**03.07.2000 JP 2000201300**

(71) Applicant: **Nippo Ltd.**
**Suita-shi, Osaka-fu (JP)**

(72) Inventor: **Yamada, Shigeyuki, c/o NIPPO Ltd.**
**Ichinomiya-shi, Aichi-ken (JP)**

(74) Representative: **Baumgärtel, Gunnar, Dr. et al**
**Patentanwälte Maikowski & Ninnemann,**
**Postfach 15 09 20**
**10671 Berlin (DE)**

(54) **One-way clutches**

(57)    One way clutches are taught that preferably include a rotor (11) having an outer surface, an outer sleeve (1) having an inner surface and journaled on the rotor in spaced relationship. A tapered roller receiving space (12) may be defined between the outer surface of the rotor and the inner surface of the outer sleeve, and a roller (2) may be disposed within the roller receiving space (12). The inner surface of the outer sleeve and the outer surface of the rotor may be preferably shaped in such a way that a tapered angle defined between a first tangent line passing through a contact point of the roller and the rotor outer surface and a second tangent line passing through a contact point of the roller and the inner surface of the outer sleeve remains constant or substantially constant even if an engagement position of the roller within the roller receiving space is varied from an ideal position when the roller engages the tapered roller receiving space. Further, retainers may partially define the roller receiving space and the retainers may comprise a non-ferromagnetic material. A magnet (3) may be disposed within each retainer in order to attract the roller. Moreover, the tapered roller receiving space (12) may be further defined in part by a spiral shaped or substantially spiral shaped cam surface that contacts the roller (2).

FIG. 1

EP 1 167 801 A1

**Description**

Background of the Invention

1. Field of the Invention

The present invention relates to one-way clutches. Preferably, such one-way clutches may be utilized with a low torque drive source. For example, such one-way clutches may be utilized with a drive source for office automation machines, industrial precision machines, or other such machines, such as a drive source for a paper feeder in a business machine (e.g. a copier).

2. Description of the Related Art

A one-way clutch is described in Japanese Laid-Open Patent Publication No. 62-228721 and its corresponding US Patent No. 4,770,279, and this known one-way clutch is shown in the attached FIG. 10. This known one-way clutch comprises a rotor shaft 111, an outer sleeve 101 that is journalled on the rotor shaft 111 in a spaced relationship, a plurality of roller pins 102 that are located between the rotor shaft 111 and the outer sleeve 101, and a plurality of biasing means or retainers 104 that have respective roller pin attracting surfaces 104a. The retainers 104 are made of a magnetic material and the roller pins 102 are made of a ferromagnetic material. Thus, the roller pins 102 are attracted to the roller pin attracting surfaces 104a.

The retainers 104 are disposed between the rotor shaft 111 and the outer sleeve 101 at uniform intervals and are fixedly attached to the inner surface of the outer sleeve 101. Therefore, a plurality of roller pin receiving spaces 112 are defined at uniform intervals between the rotor shaft 111 and the outer sleeve 101. The inner surface of the outer sleeve 101 has inclined surfaces or cam surfaces 107 that are positioned adjacent to the roller pin attracting surfaces 104a. Each of these cam surfaces 107 inclines toward the roller pin attracting surfaces 104a, so that each of the roller pin receiving spaces 112 is gradually tapered toward the roller pin attracting surface 104a As will be appreciated, all the roller pin receiving spaces 112 are tapered in the same direction around the rotor shaft 111. The roller pins 102 are rotatably disposed within the respective tapered roller pin receiving spaces 112, so as to be circumferentially positioned around the rotor shaft 111 at uniform intervals.

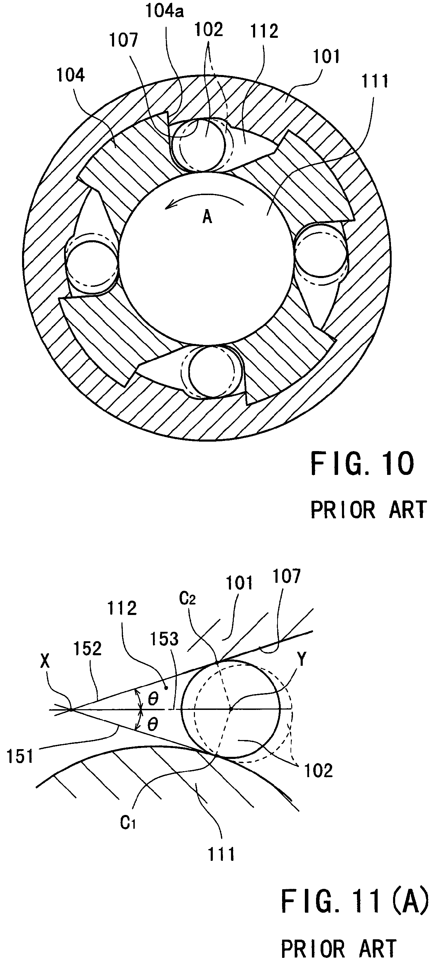

According to such a one-way clutch, when the rotor shaft 111 rotates in an "operational" direction (i.e. the direction in which the roller pin receiving spaces 112 are tapered as shown by arrow A in FIG. 10), the roller pins 102 will move toward the roller pin attracting surface 104a of the retainer 104 and engage the narrowed portions of the respective tapered roller pin receiving spaces 112, as shown by the solid line in FIG. 10. As a result, the rotor shaft 111 will be coupled with the outer sleeve 101 and thus, the outer sleeve 101 will rotate together with the rotor shaft 111. On the other hand, when the rotor shaft 111 rotates in a "non-operational" direction (clockwise as shown in FIG. 10), the roller pins 102 will disengage from the respective narrowed portions of the tapered roller pin receiving spaces 112 and move into the wider portion of the spaces 112, as shown by the phantom line in FIG. 10. Therefore, the rotor shaft 111 will disengage from the outer sleeve 101 and the rotor shaft 111 can rotate without causing the outer sleeve 101 to rotate. Thus, the clutch only couples the outer sleeve 101 to the rotor shaft 111 in one rotational direction.

Because the retainers 104 are made of magnetic materials and thereby attract the roller pins 102 toward the roller pin attracting surfaces 104a, the introduction of the roller pins 102 into the narrowed portions of the respective roller pin receiving spaces 112 is facilitated.

In addition, a one-way clutch having the retainers 104 that include such springs is taught, for example, in Japanese Laid-Open Patent Publication No. 10-238560, in which the retainers 104 have springs instead of making the retainers 104 from magnetic materials. In such a case, the springs are adapted to bias the roller pins 102 towards the roller pin attracting surfaces 104a, thereby facilitating the introduction of the roller pins 102 into the narrowed portions of the respective roller pin receiving spaces 112.

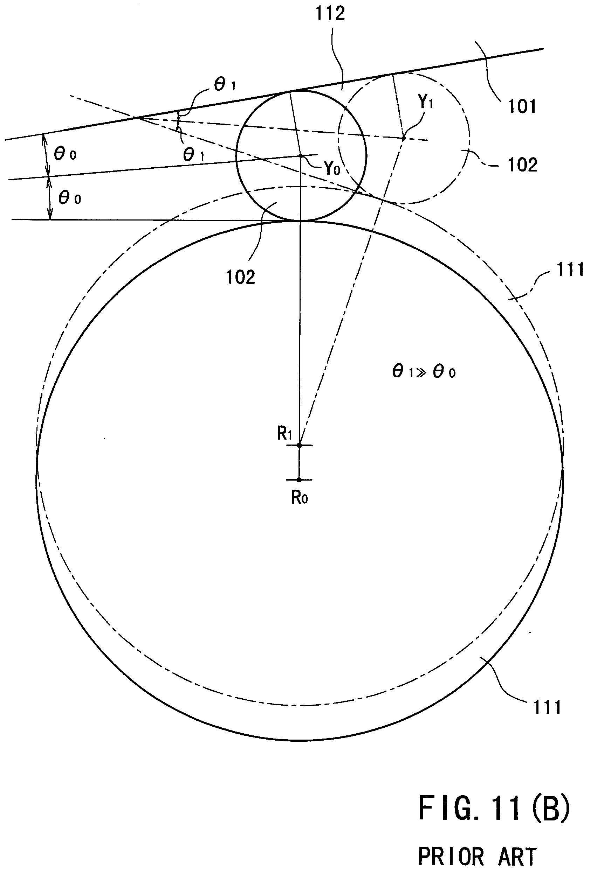

Further, as best shown in FIG. 11(A), when the roller pin 102 contacts or engages the narrowed portion of the tapered roller pin receiving space 112, an angle is defined between the first and second tangent lines 151, 152 extending from the roller pin 102. This angle will be referred to as a "tapered" angle. The first tangent line 151 passes through a contact point $C_1$ of the roller pin 102 and the rotor shaft 111. The second tangent line 152 passes through a contact point $C_2$ of the roller pin 102 and the cam surface 107. The tapered angle can be bisected by a line 153 passing through an intersection X of the tangent lines 151, 152 and the center Y of the roller pin 102, to thereby define angle $\theta$, which angle will be generally referred to as a "wedge" angle. The inclination of the cam surface 107 in FIG. 11(A) has been exaggerated for purposes of illustrating this aspect of the known one-way clutch.

If any forces are radially exerted on the rotor shaft 111 when the one-way clutch is operated, the relative position of the rotor shaft 111 and the outer sleeve 101 may radially deviate from an ideal position. If the rotor shaft 111 has deviated from the ideal position, the position of the roller pin 102 within the roller pin receiving space 112 (i.e. the "roller pin engaging position") will be changed when the roller pin 102 contacts or engages the narrowed portion of the tapered roller pin receiving space 112. This change in the roller pin engaging position causes the wedge angle $\theta$ to change, thereby changing the nature of the stresses that are exerted on

the contact points $C_1$, $C_2$, because the cam surface 107 is a substantially flat surface. As a result, the stresses that are exerted on the respective pairs of contact points $C_1$, $C_2$ become different from each other, thereby concentrating the stress at the specific pair of contact points $C_1$, $C_2$. Such stress concentration may cause damage to the outer sleeve 101, partial wear of the cam surfaces 107, the roller pins 102 and the rotor shaft 11, indentation formation in the cam surfaces 107, or other such harmful phenomena. Naturally, such harmful phenomena may have significant adverse effects on the performance of the known one-way clutch.

Summary of the Invention

It is an object of the present invention to provide one-way clutches that may reduce or eliminate one or more of the problems associated with known one-way clutch.

In one aspect of the present teachings, one-way clutches may be designed to reduce wear and increase durability. In another aspect of the present teachings, one-way clutches may be designed to stabilize performance of the clutch during operation.

In one particular aspect of the present teachings, one-way clutches may have a rotor and an outer sleeve disposed about the rotor. At least one roller may be disposed between the rotor and the outer sleeve. An inner surface of the outer sleeve and an outer surface of the rotor may be preferably designed so that a tapered angle formed between a first tangent line passing through a contact point of the roller and the rotor outer surface and a second tangent line passing through a contact point of the roller and the inner surface of the outer sleeve remains substantially constant even if an engagement position of the roller within the roller receiving space varies from an ideal position when the roller engages a narrowed portion of the tapered roller receiving space. In this case, stresses exerted on the contact point of the roller and the inner surface of the outer sleeve and the contact point of the roller and the rotor outer surface are substantially constant, even if the position of the roller in the roller receiving space varies as a result of deviation of the relative position of the rotor and the outer sleeve when the roller engages the narrowed portion of the tapered roller receiving space. As a result, stress change at these contact points is effectively prevented, thereby increasing the reliability of the one-way clutch.

In another aspect of the present teachings, one-way clutches may have a cam surface that is spiral shaped or substantially spiral shaped. A spiral shaped cam surface reduces stress concentration and increases reliability of the one-way clutch.

In another particular aspect of the present teachings, one-way clutches may have a plurality of retainers disposed in an annular space between a rotor and an outer sleeve and the retainers may partially define roller receiving spaces. The retainers may be constructed from a wear-resistant non-ferromagnetic material, such as a polymer material. A magnet may be disposed within each retainer and the magnets may attract respective rollers that comprise a ferromagnetic material. In such case, the retainers can be made of highly wear resistant materials, thereby increasing the durability of the one-way clutch and reducing manufacturing costs. Further, the plurality of retainers may integrally connected at an end portion.

The above aspects may be used singularly or in combination. Further, other aspects, objects, and advantages of the invention will be more fully understood from the following detailed description and appended claims when considered with the accompanying drawings.

Brief Description of the Drawings

FIG. 1 is an exploded perspective view of a one-way clutch that corresponds to a first representative embodiment of the present teachings;

FIG. 2 is a vertical cross-sectional view of the one-way clutch of FIG. 1;

FIG. 3 is a cross-sectional view taken along the line B-B in FIG. 2;

FIG. 4 is a cross-sectional view similar to FIG. 2, illustrating a one-way clutch that corresponds to a second representative embodiment of the present teachings;

FIG. 5 is a sectional view similar to FIG. 2, illustrating a one-way clutch that corresponds to a third representative embodiment of the present teachings;

FIG. 6 is an explanatory view of a helical logarithmic curve;

FIG. 7 is an enlarged partial view of FIG. 5;

FIG. 8(A) is an explanatory view of a wedge angle discussed in the present teachings;

FIG. 8(B) is an enlarged explanatory view illustrating a change of the wedge angle;

FIG. 8(C) is an enlarged explanatory view illustrating another change of the wedge angle;

FIG. 9 is a sectional view similar to FIG. 2, illustrating a one-way clutch that corresponds to a fourth representative embodiment of the present teachings;

FIG. 10 is a cross-sectional view similar to FIG 2, illustrating a known one-way clutch;

FIG. 11(A) is an explanatory view of a wedge angle of a known one-way clutch; and

FIG. 11(B) is an enlarged explanatory view illustrating a change of the wedge angle.

Detailed Description of the Invention

In one aspect of the present teachings, one-way clutches may have a tapered angle defined between a first tangent line passing through a first contact point of a roller and a rotor outer surface and a second tangent line passing through a second contact point of the roller and an inner surface of an outer sleeve. Preferably, this tapered angle remains substantially constant even if the engaging position of the roller within a roller receiving space varies from an ideal position when the roller engages the tapered roller receiving space during operation.

Such one-way clutches may optionally have a rotor and outer sleeve that may be designed so that either (1) the rotor disengages from a plurality of retainers when the clutch is in an idle state or (2) the plurality of retainers disengages from the outer sleeve when the clutch is in an idle state. A roller receiving space may be partially defined between the outer surface of the rotor and the inner surface of the outer sleeve. A plurality of roller receiving spaces may also be further partially defined by the plurality of retainers. Preferably, each roller receiving space is tapered in an operational direction. A roller may be disposed within each roller receiving space. In a preferred embodiment, a plurality of rollers are disposed within a plurality of roller receiving spaces.

The inner surface of the outer sleeve may partially define a cam surface. The cam surface and the rotor outer surface may partially define the tapered roller receiving space. The cam surface may have a shape of a portion of, for example, a logarithmic spiral, a Bernoulli's spiral, an equiangular spiral or may be defined by a circular arc that is approximately a logarithmic spiral, a Bernoulli's spiral or an equiangular spiral. In the alternative, the inner surface of the outer sleeve may have a polygonal shape and a portion of the polygonal shape may define the cam surface.

In another aspect of the present teachings, an outer surface of the rotor may partially define a cam surface. In this case, the cam surface and the inner surface of the outer sleeve may define the tapered roller receiving space. Similarly, the cam surface may have a shape of a portion of, for example, a logarithmic spiral, a Bernoulli's spiral and an equiangular spiral or may be defined by a circular arc that is approximately a logarithmic spiral, a Bernoulli's spiral or an equiangular spiral. In the alternative, the outer surface of the rotor may have a polygonal shape and a portion of the polygonal shape defines the cam surface.

In another aspect of the present teachings, one-way clutches may comprise at least two retainers disposed in a spaced relationship between the outer surface of the rotor and the inner surface of the outer sleeve. The tapered roller receiving space may be partially defined by adjacent retainers. The retainers may be preferably made of a non-ferromagnetic material having a high wear resistance, such as a polymer material, and a magnet may be disposed within each of the retainers. If the rollers are made of a ferromagnetic material, the magnets disposed within the retainers will attract the respective rollers. More preferably, each of the retainers may have a roller attracting surface and the respective magnets may be embedded along the roller attracting surfaces of the retainers.

In another aspect of the present teachings, one-way clutches may comprise a plurality of retainers that substantially comprise a wear resistant non-ferromagnetic material. A magnet may be disposed within the retainer. Because non-ferromagnetic materials having a higher wear resistance than ferromagnetic materials can be utilized to form the retainer in this aspect, the wear resistance of the retainers may be increased over known one way clutches. Thus, in this particular aspect of the present teachings, one-way clutches having improved durability are taught These one-way clutches may be further constructed according to the teachings noted above, or other constructions are possible.

For example, such one-way clutches may also include a rotor having an outer surface. An outer sleeve having an inner surface may be disposed around the rotor in a spaced relationship. An annular space may be defined between the rotor and the inner surface of the outer sleeve. A plurality of retainers may be disposed within the annular space in a spaced relationship. A plurality of rollers may be disposed within respective roller receiving spaces defined between the rotor and the outer sleeve. The roller may preferably comprise a ferromagnetic material. Each of the retainers may have a roller attracting surface. A magnet may be embedded along each roller attracting surface.

Each of the additional features disclosed above and below may be utilized separately or in conjunction with other features to provide improved clutches. Representative examples of the present invention, which examples utilize many of these additional features in conjunction, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features disclosed in the following detail description may not be necessary to practice the invention in the broadest sense, and are instead taught merely to particularly describe some representative examples of the invention. Moreover, various features of the representative examples may be combined in ways that are not specifically enumerated in order to provide additional useful embodiments of the present teachings.

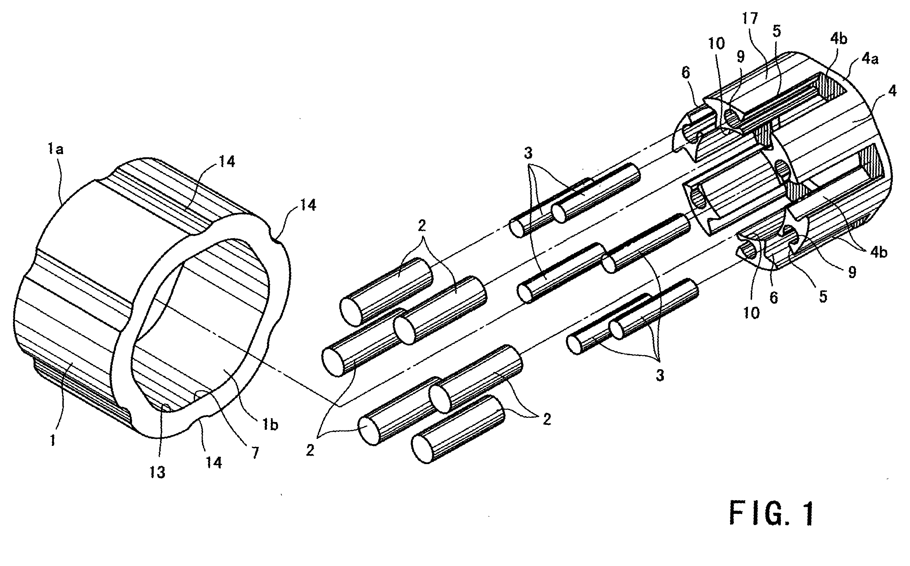

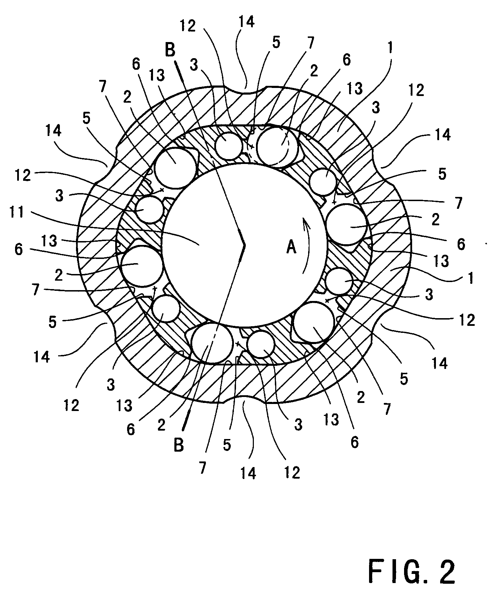

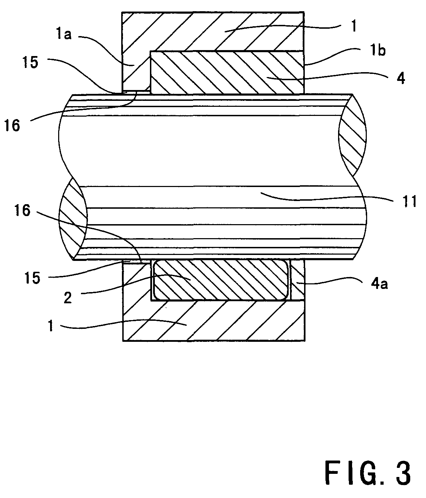

A one-way clutch according to a first representative embodiment will now be described with reference to FIGS. 1 to 3. The one-way clutch may comprise a cylindrical rotor shaft 11, which is shown in FIGS. 2 and 3, but is omitted from FIG. 1 for purposes of clarity. An outer sleeve 1 may be disposed around the rotor shaft 11 in a spaced relationship, so as to define an annular space between the outer sleeve 1 and rotor shaft 11. Six rollers or roller pins 2 may be located within the annular space between the rotor shaft 11 and the outer sleeve 1. In addition, six elongated retainers 4 may be located in the annular space between the rotor shaft 11 and the outer sleeve 1. Although six roller pins 2 and six retainers 4 are taught in this representative example, greater or fewer roller pins and retainers naturally may be utilized.

The outer sleeve 1 is preferably made of an alloy and has a substantially cylindrical shape. In this embodiment, the inner surface of the outer sleeve 1 may have a rounded hexagonal shape in cross section. For example, as best shown in FIG. 2, the inner surface may have six concave portions that substantially correspond to the rounded apices of a hexagon shape and six flat or non-concave portions that substantially correspond to sides of the hexagon. The concave portions cooperate with the non-concave portions, so as to define retainer receiving surfaces 13 and cam surfaces 7. Each of the retainer receiving surfaces 13 extends from the mid-point of a concave portion to the mid-point of an adjacent non-concave portion in a clockwise direction as shown in FIG. 2. On the other hand, each of the cam surfaces 7 extends from the mid-point of a non-concave potion to the mid-point of an adjacent concave portion. Therefore, a substantial portion of the cam surface 7 is flat, because this portion corresponds to the flat portion of the inner surface of the outer sleeve 1.

Further, the outer surface of the outer sleeve 1 may have a plurality of engagement grooves 14 that may be designed to engage projections provided on a clutch casing (not shown). In addition, as shown in FIG. 3, the forward end of the outer sleeve 1 may have an annular end wall 1a, so as to enclose the annular space between the outer sleeve 1 and the rotor shaft 11 at its forward end (left side as viewed in FIG. 3). Further, the end wall 1a may have a rotor shaft receiving hole 16 that is adapted to receive the rotor shaft 11 with a small clearance 15 between the hole 16 and the rotor shaft 11.

The retainers 4 may be preferably made of a nylon material (polyamide resin) having good wear resistance or another polymer-based material having good wear resistance. As shown in FIG. 1, these retainers 4 may be integrally connected with each other by means of an annular end wall 4a, so as to form a retainer unit having six slots 4b, in which the annular end wall 4a serves as a bottom surface for each slot 4b. The integrally formed retainer unit may then be press fitted into the outer sleeve 1, so that the retainers 4 contact the inner surface of the outer sleeve 1. Thus, the retainers 4 are received within the annular space between the rotor shaft 11 and the outer sleeve 1.

As shown in FIG. 2, the retainers 4 are arranged at uniform intervals within the annular space, so as to correspond to the retainer receiving surfaces 13 of the outer sleeve 1. Each of the retainers 4 has an outer engagement surface 17 that can mate with the retainer receiving surface 13. An inner bearing surface 10 (FIG. 1) corresponds to the outer surface of the rotor shaft 11. Therefore, the integrally formed retainers 4 are tightly disposed within the annular space between the inner surface of the outer sleeve 1 and the outer surface of the rotor shaft 11. Preferably, the outer engagement surface 17 is adapted to securely engage the retainer receiving surface 13, so that the retainer 4 will rotate together with the outer sleeve 1. On the other hand, the inner bearing surface 10 is adapted to slidably contact the outer surface of the rotor shaft 11, so as to permit the rotor shaft 11 to freely rotate in an idle state without rotating the retainers 4 and the outer sleeve 1. In one preferred embodiment, a clearance of about 0.02 mm may be provided between the inner bearing surface 10 and the surface of the rotor shaft 11. Also, each of the retainers 4 has a curved roller pin attracting surface 5 that is positioned at the mid-point of the non-concave portion. A V-shaped grooved roller pin restriction surface 6 may be positioned at the mid-point of the concave portion.

The retainers 4 received in the annular space cooperate with each other, so as to define six elongated roller pin receiving spaces 12, which spaces are enclosed by the end wall 4a at the rearmost end (right side as viewed in FIG. 3). These roller pin receiving spaces 12 are disposed within the annular space at uniform intervals, so as to correspond to the cam surfaces 7 of the outer sleeve 1. More specifically, the roller pin attracting surface 5 of the retainer 4, the retainer restriction surface 6 of the adjacent retainer 4, the corresponding cam surface 7 of the outer sleeve 1 and the surface of the rotor shaft 11 preferably define each of the roller pin receiving spaces 12.

Because the retainers 4 are arranged within the annular space in the manner described above, each of the cam surfaces 7 of the outer sleeve 1 inclines toward the roller pin attracting surfaces 5 of the corresponding retainer 4. Therefore, each of the roller pin receiving spaces 12 gradually tapers toward the roller pin attracting surface 5 of the retainer 4.

In addition, each of the retainers 4 has a cylindrical magnet bar receiving groove 9 that extends along a center line of the curved roller pin attracting surface 5 and terminates at the end wall 4a of the retainer unit. Each magnet bar receiving groove 9 is adapted to receive a cylindrical magnet bar 3. Further, as described above, because the annular space between the rotor shaft 11 and the outer sleeve 1 is enclosed by the end wall 1a of the outer sleeve 1, the magnet bars 3 can be reliably retained within the magnet bar receiving grooves 9.

The roller pins 2 preferably may be made of steel or other ferromagnetic materials and are rotatably received within the roller pin receiving spaces 12. The magnetic force of magnet bars 3 normally attracts or biases the roller pins 2 within the roller pin receiving spaces 12 toward the roller pin attracting surfaces 5. Further, the roller pins 2 are enclosed within the roller pin receiving spaces 12 by the end wall 1a of the outer sleeve 1.

Operation of the one-way clutch described according to this embodiment will now be described with reference to FIG. 2. When the rotor shaft 11 rotates in the direction indicated by arrow A (i.e. the "operational" direction), the roller pins 2, which may be disposed within the wider portion of the roller pin receiving spaces 12, move toward the attracting surfaces 5 of the retainers 4 by following the rotation of the rotor shaft 11. As a result, the roller pins 2 will contact or engage the narrowed portion of the roller pin receiving spaces 12, as shown by the phantom line. Upon engagement of the roller pins 2 with the roller pin receiving spaces 12, the rotor shaft 11 is coupled to the outer sleeve 1 by the roller pins 2 and the outer sleeve 1 will therefore rotate together with the rotor shaft 11.

The rollers pins 2 will instantaneously, or substantially instantaneously, move toward the attracting surfaces 5 of the retainers 4, because the roller pins 2 are attracted toward the retainer receiving surface 5 due to the magnetic force of the magnet bars 3. Further, the magnet bars 3 are preferably arranged such that when each of the roller pins 2 is in the wider portion of each of the roller pin receiving spaces 12, the distance between the roller pin 2 and the magnet 3 embedded in the retainer 4 is less than the distance between this roller pin 2 and the neighboring magnet bar 3 embedded in the adjacent retainer 4. That is, the magnet bars 3 are arranged in such a way that when the roller pin 2 is in the wider portion of the roller pin receiving space 12, the distance between the roller pin 2 and the magnet bar 3 that faces the receiving space 12 is less than the distance between the roller pin 2 and the magnet bar 3 that does not face the receiving space 12. Therefore, the effect of the magnetic force of the magnet bar 3 of the adjacent retainer 4 is minimized.

On the other hand, when the rotor shaft 11 rotates in a reverse direction (i.e. the "non-operational" direction), the roller pins 2 move into the wider portion of the respective roller pin receiving spaces 12 against the magnetic forces of the magnet bars 3, as shown by the solid line. As a result, the roller pins 2 are disengaged or released from the roller pin receiving spaces 12, thereby decoupling the rotor shaft 11 from the outer sleeve 1, so that the rotor shaft 11 can rotate without rotating the outer sleeve 1.

Further, although the roller pins 2 may contact the retainer restriction surfaces 6 when the roller pins 2 are in the wider portion of the respective roller pin receiving spaces 12, the contact areas between the roller pins 2 and the retainer restriction surfaces 6 are effectively minimized, because each of the surfaces 6 has a V-shaped groove.

According to this embodiment, the magnet bars 3 are separately formed and are embedded within the retainers 4. Therefore, the retainers 4 can attract the roller pins 2 toward the roller pin attracting surfaces 5 and it is not necessary to also make the retainers 4 from magnetic materials that generally have a lower wear resistance, as in the above-described known art. That is, the retainers 4 can be made of highly wear resistive materials, e.g. nylon, to thereby increase their wear resistance. As a result, it is possible to reduce wear, for example, of the retainer restriction surfaces 6 that is caused by rotation of the roller pins 2 when the rotor shaft 11 rotates during an idle state. In addition, the magnet bars 3 may more smoothly exert a force on the roller pins 2 than springs described in the related art. Therefore, the magnetic materials can perform the clutch function more smoothly than known designs employing springs.

Moreover, because the retainers 4 can be made of highly wear resistive materials, the retainers 4 can be designed, so that the inner bearing surfaces 10 may closely contact the surface of the rotor shaft 11. That is, it is possible to reduce the clearance between the retainers 4 and rotor shaft in order to minimize deviation of the rotor shaft 11 from an ideal position.

In addition, because the inner surface of the outer sleeve 1 is substantially hexagonally shaped in cross section, the retainers 4 (the retainer unit) can be non-rotatably received within the annular space by merely pressing the retainers 4 into the outer sleeve 1. Also, the respective retainers 4 can be precisely and accurately arranged in predetermined (ideal) positions. As a result, the manufacturing process for such clutches may be simplified compared to known clutches, thereby reducing manufacturing costs.

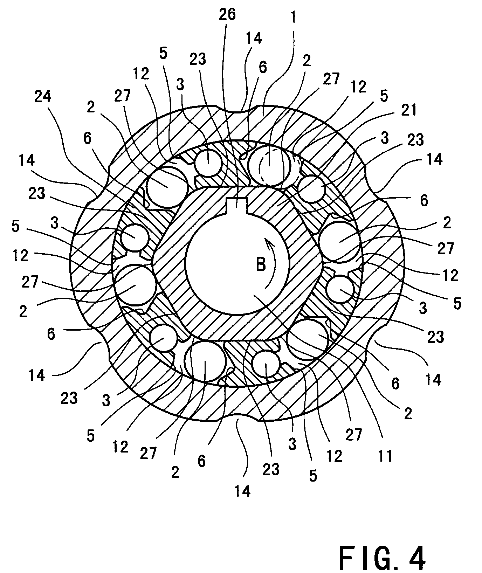

A one-way clutch according to a second representative embodiment will now be described with reference to FIG. 4. Because this embodiment is related to the first embodiment and includes similar elements as the first embodiment, the same reference numerals are used to describe the same or similar features and their descriptions are omitted or simplified. Therefore, only constructions that are different from those constructions described in the first embodiment will be explained in detail.

As shown in FIG. 4, this one-way clutch may also include a cylindrical rotor shaft 11. An inner sleeve 21 may be disposed around the rotor shaft 11 and may be coupled to the rotor shaft by a protrusion 26 provided on the rotor shaft 11 and a protrusion receiving portion formed in the inner sleeve 21. An outer sleeve 1 is disposed around the inner sleeve 21 in a spaced relationship, so as to form an annular space between the outer sleeve 1 and the inner sleeve 21. Six elongated roller pins 2 may be located within the annular space between the inner sleeve 21 and the outer sleeve 1 and six elongated retainers 24 also may be located within the annular space between the inner sleeve 21 and the outer sleeve 1. Again, greater or fewer than six roller pins 2 and six retainers 24 may be utilized.

The outer sleeve 1 is preferably made of an alloy and has an annular inner surface and an outer surface. Unlike the first embodiment, the inner surface of the outer sleeve 1 has a circular cross section. The inner sleeve 21 is also preferably made of an alloy and has a substantially annular outer surface and the outer surface may be, for example, a rounded hexagonal shape in cross section. As a result, this outer surface of the inner sleeve 21 may include six convex portions that substantially correspond to rounded apices of the hexagon and six flat or non-convex portions that substantially correspond to sides of the hexagon, which portions are disposed adjacently to each other. The convex portions cooperate with the non-convex portions in order to define retainer receiving surfaces 23 and cam surfaces 27 on the outer surface of the inner sleeve 21. Each of the retainer receiving surfaces 23 extends from the mid-point of the non-convex portion to the mid-point of the convex portion in a counter clockwise direction as shown in FIG. 4. On the other hand, each of the cam surfaces 27 extends from the mid-point of the convex potion to the mid-point of the adjacent non-convex portion in the same direction. As will be appreciated, this embodiment differs from the first embodiment, because a substantial portion of the cam surface 27 is curved. This curved portion corresponds to the convex portion of the outer surface of the inner sleeve 21.

Like the first embodiment, the retainers 24 may be made of nylon or another wear resistance polymer material and are integrally connected with each other at one end, so as to form an integral retainer unit. The integral retainer unit may be press fitted over the inner sleeve 21, so that the retainers 24 engage the outer surface of the inner sleeve 21. Thus, the retainers 24 are received in the annular space between the inner sleeve 21 and the outer sleeve 1.

The retainers 24 are arranged at uniform intervals in the annular space, so as to correspond to the retainer receiving surfaces 23 of the inner sleeve 21. Each of the retainers 24 has an inner engagement surface (which surface functionally corresponds to the outer engagement surface 17 of the first embodiment) that can mate with the retainer receiving surface 23 of the inner sleeve 21. An outer bearing surface (which surface functionally corresponds to the inner bearing surface 10 of the first embodiment) slidingly contacts the inner surface of the outer sleeve 1. The inner engagement surface of each retainer 24 is preferably adapted to securely engage the retainer receiving surface 23, so that the retainer 24 may rotate together with the inner sleeve 21. On the other hand, the outer bearing surface of each retainer 24 is adapted to slidably contact the outer sleeve inner surface, so as to permit the outer sleeve 1 to rotate without rotating the retainers 24. Preferably, a clearance of about 0.02 mm is provided between the inner surface of the outer sleeve 1 and the outer surface of the inner sleeve 21. Also, each of the retainers 24 has a curved roller pin attracting surface 5 that is positioned at the mid-point of the convex portion and has a V-shaped grooved roller pin restriction surface 6 that is positioned at the mid-point of the non-convex portion.

The retainers 24 received in the annular space cooperate with each other, so as to define six elongated roller pin receiving spaces 12 between the respective retainers 24. These roller pin receiving spaces 12 are positioned in the annular space at uniform intervals, so as to correspond to the cam surfaces 27 of the inner sleeve 21. That is, the roller pin attracting surface 5 of the retainer 4, the retainer restriction surface 6 of the adjacent retainer 4, the corresponding cam surface 27 of the inner sleeve 21 and the inner surface of the outer sleeve 1 preferably defined each of the roller pin receiving spaces 12.

Because the retainers 24 are arranged in the annular space in this manner, each of the cam surfaces 27 of the inner sleeve 21 substantially inclines toward the roller pin attracting surfaces 5 of the corresponding retainer 24. Therefore, each of the roller pin receiving spaces 12 is substantially tapered toward the roller pin attracting surface 5 of the retainer 24. Further, similar to the first representative embodiment, a cylindrical magnet bar 3 is embedded within each of the retainers 24 and extends along the curved roller pin attracting surface 5. In addition, the roller pins 2 are rotatably received in the respective roller pin receiving spaces 12.

Operation of the one-way clutch described according to the second representative embodiment will now be described. As the rotor shaft 11 rotates in the operational direction as indicated by arrow B, the inner sleeve 21 rotates together with the rotor shaft 11. When the inner sleeve 21 rotates, the roller pins 2 disposed within the wider portion of the respective roller pin receiving spaces 12 move toward the attracting surfaces 5 of the retainers 4 in order to follow the rotation of the inner sleeve 21. Thus, as shown by the phantom line in FIG. 4, the roller pins 2 will engage the narrowed portion of the respective roller pin receiving spaces 12. Upon engagement of the roller pins 2 with the roller pin receiving spaces 12, the inner sleeve 21 is coupled to the outer sleeve 1 by the roller pins 2 and the outer sleeve 1 will rotate together with the rotor shaft 11 and the inner sleeve 21. Further, the motion of the rollers pins 2 toward the attracting surfaces 5 of the retainers 24 is substantially instantaneously performed, because the roller pins 2 are attracted toward the retainer receiving surface 5 by the magnetic force of the magnet bars 3.

On the other hand, when the inner sleeve 21 rotates in the reverse direction (i.e. the "non-operational" direction) due to reverse rotation of the rotor shaft 11, the roller pins 2 move into the wider portion of the respective roller pin receiving spaces 12, as shown by the solid line in FIG. 4, so as to release or disengage the roller pins 2 from the roller pin receiving spaces 12. Upon disengagement of the roller pins 2 from the roller pin receiving spaces 12, the inner sleeve 21 is decoupled or disengaged from the outer sleeve 1. As a result, the rotor shaft 11 and the inner sleeve 21 can rotate with the retainers 24 and the roller pins 2 within the outer sleeve 1 during an idle state. This one-way clutch generally provides the same advantageous effects as the first representative embodiment.

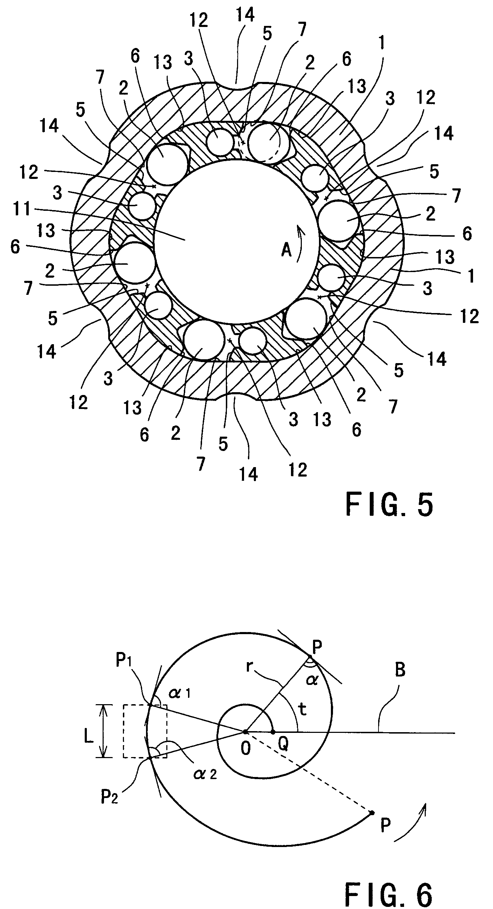

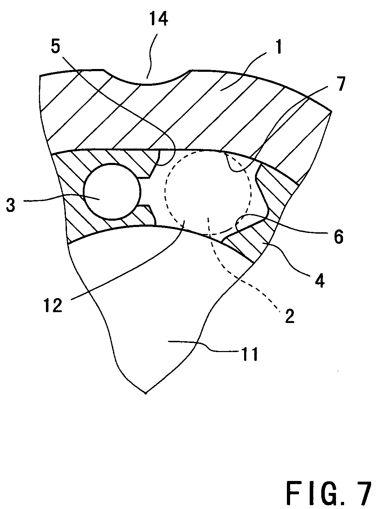

A one-way clutch according to a third embodiment will now be described with reference to FIGS. 5 to 8. Because basic constructions and operations of this embodiment are the substantially same as the first embodiment, except for the shape of each of the cam surfaces, the same reference numerals are used to identify the same elements and the description of the same elements in the third embodiment has been omitted or simplified. Therefore, only constructions that are different from those constructions described in the first embodiment will be explained in detail.

In this embodiment, the substantial portion of each of the cam surfaces 7 has a special shape that is different from the cam surfaces 7 of the first respective embodiment. That is, a substantial portion of the cam surface 7 is a curved surface that is defined by a logarithmic spiral. On the other hand, the substantial portion of the cam surface 7 of the first representative embodiment is a simple flat surface.

As shown in FIG. 6, a logarithmic spiral is mathematically defined as a set of points P of polar coordinates (r, t) that satisfy the following exponential formula (I):

$$r = e^{at+b} \qquad (I)$$

wherein r is a distance between a pole or origin O and the point P (hereinafter, the distance r will be referred to as a radius vector OP), t is an angle between the radius vector r and a fixed line B (hereinafter, angle t will be referred to as a declination angle t), and a and b are constants, respectively. In addition, the origin O corresponds to a quasi-near point in a logarithmic spiral. Further, the logarithmic spiral shown in FIG. 6 is a curve that diverges from a point Q along the fixed line B. As will be apparent, the constants a and b are arbitrary values that may be assigned to the equation, so as to define the position of the point Q and the divergence (or convergence) of the spiral. Therefore, different kinds of logarithmic spirals can be drawn by selecting values for the constants a and b.

A logarithmic spiral has a feature that an angle $\alpha$ between a tangent line extending from the point P and the radius vector OP is constant regardless of the declination angle t. That is, with regard to a segment L (FIG. 6) for example, angle $\alpha_1$ between a tangent line extending from point $P_1$ and a radius vector $OP_1$ is equal to angle $\alpha_2$ between a tangent line extending from point $P_2$ and a radius vector $OP_2$.

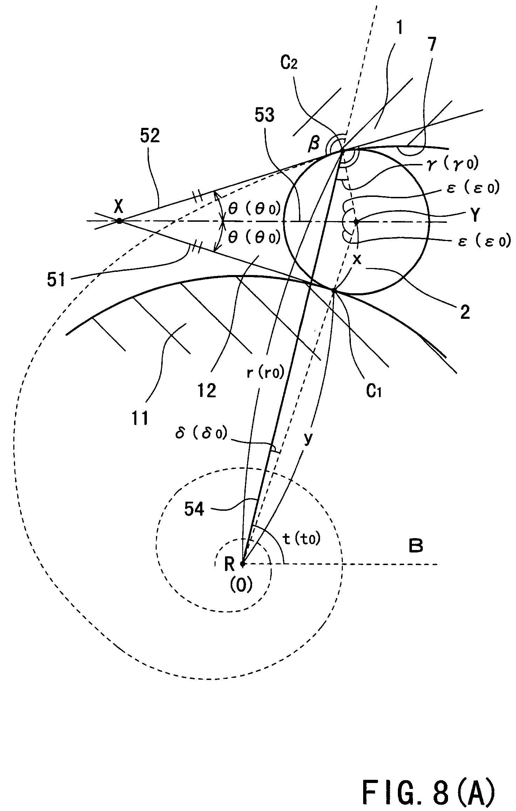

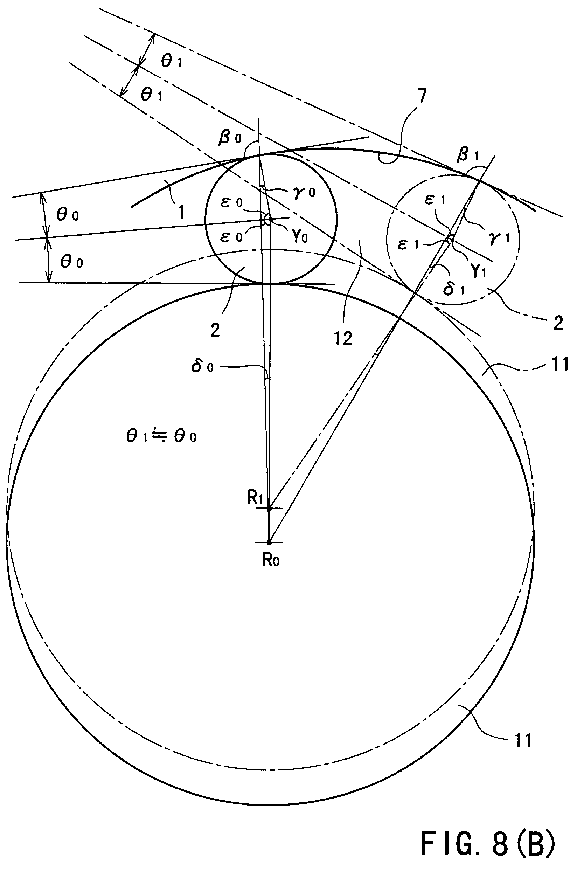

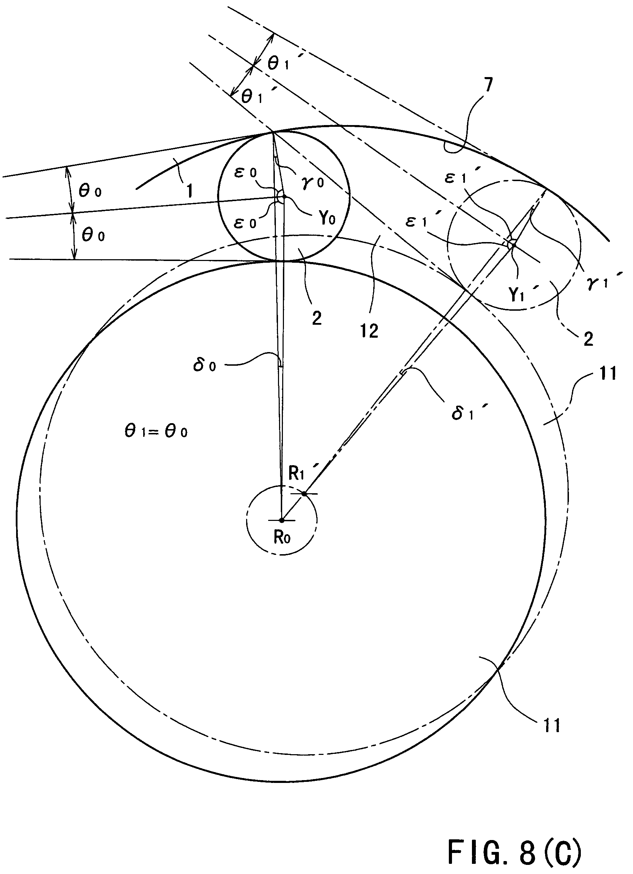

In the third embodiment shown in FIGS. 8(A) and 8(B), the substantial portion of each of the cam surfaces 7 is defined by a part of a special logarithmic spiral (which will be hereinafter described). Further, the part of the logarithmic curve is preferably selected on the basis of the distance between the cam surface 7 and the central axis R of the rotor shaft 11. In general, the part of the logarithmic curve is selected in such a way that a corresponding radius vector of the selected part is substantially identical to the distance between the cam surface 7 and the central axis R of the rotor shaft 11. As will be appreciated, the substantial portion of each of the cam surfaces 7 defined by such a logarithmic spiral is arranged in such a manner that the origin of the logarithmic curve is identical to the central axis R of the rotor shaft 11.

According to such a one-way clutch, as shown FIG. 8(A), when the roller pin 2 engages the narrowed portion of the tapered roller pin receiving space 12, a tapered angle can be defined between first and second tangent lines 51,52 on the roller pin. Tangent line 51 corresponds to a tangent line that passes through a contact point $C_1$ of the roller pin 2 and the rotor shaft 11. Tangent line 52 corresponds to a tangent line that passes through a contact point $C_2$ of the roller pin 2 and the cam surface 7. This tapered angle can be bisected by a line 53 passing through an intersection X of these tangent lines 51, 52 and a center Y of the roller pin 2, to thereby define wedge angle $\theta$, because both triangles $\triangle YC_1X$ and $\triangle YC_2X$ are right triangles that are congruent with each other. Further, an additional angle $\beta$ can be defined between the second tangent line 52 and a line 54 that passes through the contact point $C_2$ and the rotor shaft central axis R. Because logarithmic spirals have the above described characteristics, the angle $\beta$ (which angle corresponds to the angle $\alpha$ in FIG. 6) does not change if the pair of contact points $C_1$, $C_2$ are shifted as a result of a change in the relative position of the rotor shaft 11 with respect to the outer sleeve 1.

The special logarithmic spiral can be obtained from the exponential formula (I) by selecting optimal values for the constants a and b. As will be easily understood, these constants a and b can be calculated by specifying an ideal value $\theta_0$ for the wedge angle $\theta$. (In general, such an ideal angle $\theta_0$ can be appropriately determined based on experience, and is preferably 1-15 degrees and most preferably 2-8 degrees.)

The method of calculating the constants a and b in the equation (I) for obtaining the special logarithmic spiral will be described with reference to FIG. 8(A), in which the outer sleeve 1, the rotor shaft 11 and the roller pin 2 are in an ideal position. The target logarithmic spiral is shown by a broken line. This spiral has an origin O that coincides with the central axis R of the rotor shaft 11 and has a fixed line B. As will be recognized, this spiral is a curve that converges from a point (not shown) along the fixed line B.

Generally speaking, when a curve is drawn using an equation [r = f(t)], an angle z between a radius vector and a tangent line that passes through an intersection of the curve and the radius vector is defined by the equation [tan z = r/r', r' = dr/dt]. Therefore, the angle β can be determined by the following equation (II):

$$\tan \beta = r/r' \qquad (II)$$

$$r' = dr/dt$$

The logarithmic spiral has an additional feature that r' is determined by the equation [r' = dr/ dt = a $e^{at+b}$]. This feature is a well known feature of an exponential function. Therefore, equation (II) can be rewritten as equation (II'):

$$\tan \beta = e^{at+b}/ae^{at+b} = 1/a \text{ or } a = 1/\tan \beta \qquad (II')$$

In addition, triangle $\Delta YC_2R$ has three interior angles $\gamma$, $\delta$, $2\varepsilon$. According to the cosine theorem, a radius vector r is given by the following equation (III):

$$r = \{x^2 + (x+y)^2 - 2x(x+y)\cos 2\varepsilon\}^{1/2} \qquad (III)$$

    x: radius of the roller pin
    y: radius of the rotor shaft

Because an ideal value $\varepsilon_0$ for $\varepsilon$ can be expressed by 90° $\theta_0$, an ideal value $r_0$ for r can be determined from this equation (III).
Further, according to the sine theorem, angle $\gamma$ and $\delta$ are determined by the following equations (IV) and (V):

$$r/\sin 2\varepsilon = (x+y)/\sin \gamma \qquad (IV)$$

$$r/\sin 2\varepsilon = x/\sin \delta \qquad (V)$$

Using the ideal value $\varepsilon_o$ and the ideal value $r_0$ of r, ideal values $\gamma_0$ and $\delta_0$ for the angles $\gamma$ and $\delta$ are determined from the equations (IV) and (V), respectively. Therefore, using the obtained ideal value $\gamma_0$, the constant a can be determined from equation (II'), because the angle $\beta$ can be expressed as 90° + $\gamma_0$.
On the other hand, equation (I) can be restated as follows:

$$\log_e r = at + b \text{ or } b = \log_e r - at \qquad (I')$$

Using the ideal value $r_0$ obtained from the equation (III) and a value $t_0$ for angle t that corresponds to the ideal value $r_0$, the constant b can be determined from this equation (I'). Thus, the optimized logarithmic spiral can be obtained

Features of the one-way clutch in which the substantial portion of the cam surface 7 is defined by the special logarithmic spiral thus obtained will be described with reference to FIG. 8(B) and 11(B).
As shown in FIG. 8(B), when the outer sleeve 1, the rotor shaft 11 and the roller pin 2 are in the ideal position of the present one-way clutch, the roller pin 2 engages the narrowed portion of the tapered roller pin receiving space 12, as shown by solid lines. At this time, the wedge angle $\theta$ is equal to the ideal angle $\theta_0$. If the center R of the rotor shaft 11 moves from an ideal position $R_0$ into a position $R_1$ along a line $R_0Y_0$, the engagement position of the roller pin 2 in the roller pin receiving space 12 changes, as shown by broken lines. (The distance between $R_0$ and $R_1$ in FIG. 8(B) has been exaggerated for illustration purposes.) As the feature of the logarithmic spiral, angles $\beta_1$ and $\gamma_1$ are equal to $\beta_0$ and $\gamma_0$, respectively. To the contrary, angles $\varepsilon_1$ and $\delta_1$ are not equal to angles $\varepsilon_0$ and $\delta_0$, respectively. However, the angles $\varepsilon_1$ and $\delta_1$ are substantially equal to the angles $\varepsilon_o$ and $\delta_0$, respectively. As a result, the angle $\theta_1$ (which angle is expressed by 90° $- \varepsilon_1$) is substantially equal to the ideal wedge angle $\theta_0$ (which angle is expressed by 90° $- \varepsilon_0$). That is, the change of the wedge angle $\theta$ resulting from a shift of the rotor shaft 11 is very small. Further, as will be understood, the angle $\theta_1$ may be greater or less than the ideal angle $\theta_0$ depending on direction of movement of the center R of the rotor shaft 11.
In particular, as shown in FIG. 8(C), if the center R of the rotor shaft 11 moves from the ideal position $R_0$ into a position $R_1'$ in such a way that the line $R_1' Y_1'$ aligns with the line $R_0 Y_1'$, the angles $\varepsilon_1'$ and $\delta_1'$ are also equal to the angles $\varepsilon_0$ and $\delta_0$, respectively. As a result, the angle $\theta_1'$ is equal to the ideal angle $\theta_0$. That is, the wedge angle $\theta$ does not change. Further, because the fact that the angles $\varepsilon_1'$ and $\delta_1'$ are equal to the angles $\varepsilon_0$ and $\delta_0$, respectively, can be mathematically proved, further explanation is not necessary.
To the contrary, as shown in FIG. 11(B), when the outer sleeve 101, the rotor shaft 111 and the roller pin 102 are in the ideal position of the known one-way clutch, the roller pin 102 engages the narrowed portion of the tapered roller pin receiving space 112, as shown by solid lines. If the center R of the rotor shaft 111 moves from an ideal position $R_0$ into a position $R_1$ along a line $R_0Y_0$, the engagement position of the roller pin 102 in the roller pin receiving space 112 changes, as shown by broken lines. As will be apparent from FIG. 11(B), the angle $\theta_1$ is significantly greater than the angle $\theta_0$. Therefore, the wedge angle $\theta$ will drastically change in response to a change of the relative position of the rotor shaft 111 and the outer sleeve 101.
Thus, according to the present one-way clutch, the wedge angle $\theta$, as well as the tapered angle $2\theta$, is approximately constant even if the relative position of the rotor shaft 11 and the outer sleeve 1 is changed, which is different from the known art. As a result, stresses exerted on the pair of contact points $C_1$, $C_2$ are substantially constant. Therefore, stress concentration on the pair of contact points is effectively prevented, which may thereby prevent damage to the outer sleeve 1, partial wear of the cam surfaces 7, the roller pins 2 and the rotor shaft 11, and indentation formation in the cam surfaces 7. This feature may contribute to stabilization of the performance of the one-way clutch and increase durability.

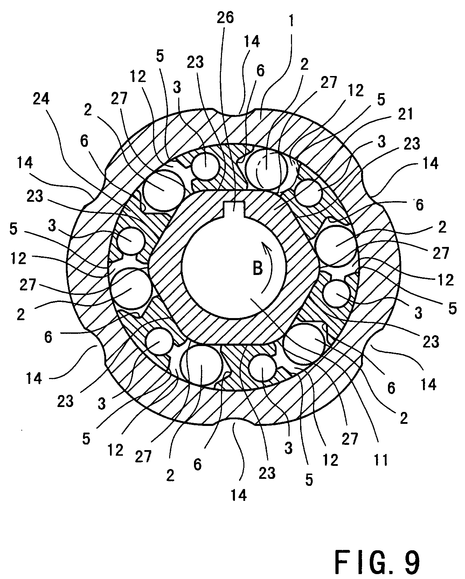

A one-way clutch according to a fourth representative embodiment will be described with reference to FIG. 9. Because basic constructions and operations of this embodiment are the substantially same as the second embodiment, except for the shape of each of the cam surfaces, the same reference numerals are used to describe the elements and overlapping descriptions are omitted or simplified. Therefore, only constructions that are different from those constructions described in the second embodiment will be explained in detail.

In this embodiment, the substantial portion of each cam surface 27 has a special shape that is different from the cam surfaces 27 of the second representative embodiment. Specifically, a substantial portion of the cam surface 27 is a curved surface that is defined by a logarithmic spiral. On the other hand, the substantial portion of the cam surface 27 of the second representative embodiment is a circular curved surface. Because the logarithmic spiral of the fourth representative embodiment is the same logarithmic spiral as described in the third representative embodiment and such a spiral is used in the substantially same manner as the third representative embodiment, further description with regard to this logarithmic spiral is not necessary. Further, the one-way clutch of this embodiment provides substantially the same advantageous effects as the third representative embodiment.

Various modifications of the first to fourth representative embodiments can be made without departing from the spirit of the present teachings. For instance, the outer sleeve of the first representative embodiment and the inner sleeve of the second representative embodiment can be also made of a synthetic resin or other polymer material. Moreover, the inner surface of the outer sleeve and the outer surface of the inner sleeve may have various shapes, such as a pentagonal shape, an octagonal shape or other such polygonal shapes. These shapes are merely intended to provide a tight contact between the two surfaces so that the two parts will rotate together.

The retainers can be preferably made of materials other than nylon, such as for example, polyacetals. Further, only the portion of the retainers that contacts either the rotating rotor or rotating outer sleeve, depending upon which of the herein-disclosed designs is utilized, may be formed from wear resistant materials, so that only the contacting portions may provide high wear resistance. Each of the retainers may been designed to have various shapes as desired, and may comprise a plurality of retainer sections that are arranged at intervals along the longitudinal direction of the clutch axis. Further, each of the rollers can be made of materials other than steel and may be a plurality of balls instead of a roller pin.

Further, although the substantial portion of each cam surface in the third and fourth representative embodiments is defined by a segment of the logarithmic spiral, the substantial portion of each cam surface can be preferably defined by a circular arc that is approximately a logarithmic spiral segment in order to simplify design and manufacturing. Also, the logarithmic spiral can be preferably replaced with a Bernoulli's spiral or an equiangular spiral that has the same feature as the logarithmic spiral. In addition, it is possible to use an epicycloid, a hypocycloid, an involute, an Archimedes's spiral, a hyperbolic spiral, a catenary, a curve of constant inclination obtained from a Frenet-Serret's formula, an ellipse, a parabola, a hyperbola, an n-th curve or other such curves, if desired.

**Claims**

1.    A one-way clutch comprising:

> a rotor having an outer surface,
> an outer sleeve having an inner surface that is disposed around the rotor,
> at least one roller receiving space defined within a space between the outer surface of the rotor and the inner surface of the outer sleeve, wherein the roller receiving space is tapered in an operational direction and
> a roller received in the roller receiving space, wherein a tapered angle defined between a first tangent line passing through a first contact point of the roller and the rotor outer surface and a second tangent line passing through a second contact point of the roller and the outer sleeve inner surface remains constant or substantially constant even if the position of the roller within the roller receiving space varies from an ideal position when the roller engages a narrowed portion of the tapered roller receiving space.

2.    A one-way clutch as defined in claim 1, wherein the inner surface of the outer sleeve has a cam surface and the cam surface and the rotor outer surface partially define the tapered roller receiving space.

3.    A one-way clutch as defined in claim 2, wherein the cam surface comprises a curved surface that is defined by a curve selected from the group consisting of a logarithmic spiral, a Bernoulli's spiral and an equiangular spiral.

4. A one-way clutch as defined in claim 2, wherein the cam surface comprises a curved surface that is defined by a circular arc that is approximately a logarithmic spiral, a Bernoulli's spiral or an equiangular spiral.

5. A one-way clutch as defined in claim 2, wherein the inner surface of the outer sleeve has a polygonal shape and a portion of the polygonal shape defines the cam surface.

6. A one-way clutch as defined in claim 1, wherein the outer surface of the rotor has a cam surface and the cam surface and the outer sleeve inner surface partially define the tapered roller receiving space.

7. A one-way clutch as defined in claim 6, wherein the cam surface comprises a curved surface that is defined by a curve selected from the group consisting of a logarithmic spiral, a Bernoulli's spiral and an equiangular spiral.

8. A one-way clutch as defined in claim 6, wherein the cam surface comprises a curved surface that is defined by a circular arc that is approximately a logarithmic spiral, a Bernoulli's spiral or an equiangular spiral.

9. A one-way clutch as defined in claim 6, wherein the outer surface of the rotor has a polygonal shape and a portion of the polygonal shape defines the cam surface.

10. A one-way clutch as defined in claim 1, further comprising at least two retainers received in a spaced relationship between the outer surface of the rotor and the inner surface of the outer sleeve, wherein the tapered roller receiving space is further defined between the retainers.

11. A one-way clutch as defined in claim 10, wherein a magnet is disposed within each of the retainers and the roller is made of a ferromagnetic material.

12. A one-way clutch as defined in claim 11, wherein each of the retainers has a curved roller attracting surface and the magnet is embedded along the roller attracting surface.

13. A one-way clutch as defined in claim 1, wherein each tapered roller receiving space is defined in part by a retainer, the retainer comprises a wear-resistant non-ferromagnetic material, a magnet is embedded within the retainer and the roller comprises a ferromagnetic material.

14. A one-way clutch as defined in claim 13, wherein the tapered roller receiving space is further defined in part by a spiral or substantially spiral shaped cam surface.

15. A one-way clutch as defined in claim 14, wherein a plurality of retainers are disposed between the inner surface of the outer sleeve and the outer surface of the rotor and a plurality of tapered roller receiving spaces are defined in part between the retainers, wherein one roller is rotatably disposed within each tapered roller receiving space.

16. A one-way clutch comprising:

    a rotor having an outer surface,
    an outer sleeve having an inner surface disposed around the rotor in a spaced relationship, wherein an annular space is defined between the outer surface of the rotor and the inner surface of the outer sleeve,
    at least two retainers disposed within the annular space in a spaced relationship, wherein a tapered roller receiving space is defined between the retainers and the retainers comprise a non-ferromagnetic material,
    a roller rotatably disposed within the roller receiving space, wherein the roller comprises a ferromagnetic material and
    a magnet disposed within each retainer.

17. A one-way clutch as defined in claim 16, wherein each of the retainers has a roller attracting surface, the magnet being embedded along the roller attracting surface.

18. A one-way clutch as defined in claim 17, wherein the roller receiving space is defined in part by a spiral or substantially spiral shaped cam surface and the roller rotatably contacts the cam surface.

19. A one-way clutch as defined in claim 18, wherein a plurality of retainers are disposed between the inner surface of the outer sleeve and the outer surface of the rotor and a plurality of tapered roller receiving spaces are defined in part between the retainers, wherein one roller is rotatably disposed within each tapered roller receiving space.

20. A one-way clutch comprising:

    a rotor having an outer surface,
    an outer sleeve having an inner surface that is disposed around the rotor,
    a plurality of roller receiving spaces defined within a space between the outer surface of the rotor and the inner surface of the outer sleeve, wherein each roller receiving space is tapered in an operational direction and each tapered roller receiving space is defined in part by a spiral or substantially spiral shaped cam surface and
a roller received in each roller receiving space and roller rotatably contacting the cam surface.

FIG. 1

FIG. 2

FIG. 3

FIG. 4

FIG. 5

FIG. 6

FIG. 7

FIG. 8(A)

FIG. 8 (B)

FIG. 8(C)

FIG. 9

FIG. 10

PRIOR ART

FIG. 11 (A)

PRIOR ART

FIG. 11 (B)

PRIOR ART

**European Patent Office**     **EUROPEAN SEARCH REPORT**     Application Number

EP 01 25 0233

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2 504 173 A (BANKER OSCAR H) 18 April 1950 (1950-04-18) | 1,6,10, 20 | F16D41/06 |
| Y | * column 4, line 69 - line 73; figure 1 * | 7,8 | |
| X | US 3 954 161 A (EHRET FRITZ ET AL) 4 May 1976 (1976-05-04) | 1,2,4,20 | |
| Y | * column 3, line 52 - line 59; figure 2 * | 3,8, 10-12 | |
| Y | US 3 623 581 A (LIVEZEY WILLIAM G) 30 November 1971 (1971-11-30) * column 3, line 45 - line 48 * | 3,7 | |
| X | PATENT ABSTRACTS OF JAPAN vol. 016, no. 519 (M-1330), 26 October 1992 (1992-10-26) -& JP 04 191535 A (NITSUPOU SANGIYOU KK), 9 July 1992 (1992-07-09) | 16-20 | |
| Y | * abstract; figure 8 * | 10-12 | |
| X | US 2 494 006 A (EDGAR SCHOIJ) 10 January 1950 (1950-01-10) * column 5, line 73 - column 6, line 2; figure 9 * | 1,6 | TECHNICAL FIELDS SEARCHED (Int.Cl.7) |
| | | | F16D |
| A | US 5 899 294 A (SHIMIZU YASUO ET AL) 4 May 1999 (1999-05-04) * column 3, line 45 - line 54; figure 19 * | 1 | |
| A | GB 2 117 066 A (TOK BEARING CO LTD) 5 October 1983 (1983-10-05) * figure 2 * | 5 | |
| A | EP 0 947 722 A (KOYO SEIKO CO) 6 October 1999 (1999-10-06) * figure 1 * | 9 | |

The present search report has been drawn up for all claims

| Place of search | Date of completion of the search | Examiner |
|---|---|---|
| THE HAGUE | 9 October 2001 | Salé, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 1 167 801 A1

**ANNEX TO THE EUROPEAN SEARCH REPORT
ON EUROPEAN PATENT APPLICATION NO.**                    EP 01 25 0233

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2001

| Patent document cited in search report | | Publication date | Patent family member(s) | | Publication date |
|---|---|---|---|---|---|
| US 2504173 | A | 18-04-1950 | NONE | | |
| US 3954161 | A | 04-05-1976 | DE | 2343289 A1 | 06-03-1975 |
| | | | GB | 1447595 A | 25-08-1976 |
| US 3623581 | A | 30-11-1971 | NONE | | |
| JP 04191535 | A | 09-07-1992 | NONE | | |
| US 2494006 | A | 10-01-1950 | NONE | | |
| US 5899294 | A | 04-05-1999 | JP | 9301197 A | 25-11-1997 |
| | | | JP | 10194139 A | 28-07-1998 |
| | | | CA | 2205697 A1 | 17-11-1997 |
| | | | DE | 69701270 D1 | 16-03-2000 |
| | | | DE | 69701270 T2 | 26-10-2000 |
| | | | EP | 0807765 A1 | 19-11-1997 |
| GB 2117066 | A | 05-10-1983 | DE | 3309233 A1 | 29-09-1983 |
| EP 0947722 | A | 06-10-1999 | JP | 11210782 A | 03-08-1999 |
| | | | EP | 0947722 A2 | 06-10-1999 |
| | | | US | 6138804 A | 31-10-2000 |

EPO FORM P0459

For more details about this annex : see Official Journal of the European Patent Office, No. 12/82

26